# EUROPÄISCHE PATENTANMELDUNG

(11) **EP 4 176 707 A1**
(43) Veröffentlichungstag der Anmeldung: **10.05.2023**
(21) Anmeldenummer: 21206322.6
(22) Anmeldetag: 03.11.2021
(51) Int. Cl.: A01G 9/04, B65D 1/36

(54) **NESTBARER MEHRWEGTRAY FÜR BLUMENTÖPFE**

(71) Anmelder: Schoeller Allibert GmbH, 19057 Schwerin (DE)
(72) Erfinder: SCHRAMEYER, Michael, 58515 Lüdenscheid (DE); HUIZINGH, John, 9541 AH Vlagtwedde (NL)
(74) Vertreter: Winter, Brandl - Partnerschaft mbB

(57) **Zusammenfassung**

Die Offenbarung betrifft einen nestbarer Mehrwegtray (2) mit einer Vielzahl an definierten Aufnahmen (28, 30) zur Aufnahme und seitlichen Fixierung von konisch- oder kegelstumpfförmigen Behältern (52; 54), insbesondere von Blumentöpfen. Die Aufnahmen weisen erste Aufnahmen (28) zur Aufnahme von Behältern (52) einer ersten Behältergröße und zweite Aufnahmen (30) zur Aufnahme von Behältern (54) einer kleineren zweiten Behältergröße auf, wobei die Aufnahmegeometrien der ersten und zweiten Aufnahmen (28, 30) so angeordnet und miteinander verschnitten sind, dass, wenn sowohl die ersten Aufnahmen (28) also auch die zweiten Aufnahmen (30) mit Behältern (54) der zweiten Behältergröße bestückt sind, die Behälter (54) in den ersten Aufnahmen (28) jeweils von mindestens zwei Behältern (54) in benachbarten zweiten Aufnahmen (30) seitlich gestützt werden.

## Beschreibung

### Technisches Gebiet

Die vorliegende Offenbarung betrifft einen Mehrwegtray mit definierten Aufnahmen zur Aufnahme von zylindrischen oder kegelstumpfförmigen Behältern, insbesondere von Blumentöpfen.

Um einen Transport, eine Lagerung und / oder eine Aufzucht von Pflanzen in Blumentöpfen zu vereinfachen, können eine Vielzahl von Behältern, insbesondere Blumen- bzw. Pflanztöpfen, in einem Tray zusammengefasst werden. Bei einem Tray handelt es sich um eine Art Palette mit Aufnahmen, die vorgesehen und ausgebildet sind, die Behälter aufzunehmen und zu fixieren bzw. die Behälter an einer definierten Position zu halten und ein Umkippen der Behälter zu verhindern. Bei den Trays handelt es sich für gewöhnlich um aus Kunststoff gebildete Einwegartikel, welche spätestens nach Verkauf der Pflanzen entsorgt werden.

Um im Sinne der Nachhaltigkeit eine Entstehung von Kunststoffabfällen zu reduzieren, werden bereits vereinzelt Mehrwegtrays eingesetzt. Solche Mehrwegtrays werden nach ihrer Verwendung gereinigt und erneut verwendet.

Die Mehrwegtrays sind im Allgemeinen auf eine spezifische Behältergröße abgestimmt. Dies hat zur Folge, dass für verschiedene Behälter verschiedene Mehrwegtrays bereitgestellt werden müssen, was hohe Anschaffungs-, Lager- und Logistikkosten nach sich zieht.

Zur Lösung dieser Problematik offenbart die DE 20 2018 000 954 U1 einen Pflanzentray, der ausgebildet ist, im Durchmesser verschiedene Pflanztöpfe aufzunehmen. Hierfür sind in dem Pflanzentray Aufnahmen ausgebildet, in die die Pflanztöpfe platziert werden. Jeder Pflanztopf muss hierbei in eine für seinen Durchmesser geeigneten Aufnahme eingesetzt werden, wobei mehrere Aufnahmen in einer Öffnung des Pflanzentrays ausgebildet sind. Hieraus ergibt sich die Problematik, dass im Falle eines falschen Platzierens eines Pflanztopfs in einer nicht für diesen spezifischen Pflanztopf bestimmten Aufnahme eine ortsfeste Fixierung des Pflanztopfs nicht gewährleistet ist und es zu Beschädigungen an der Pflanze durch verrutschen oder verkippen kommen kann.

Aufgabe der vorliegenden Erfindung ist es daher, die Nachteile aus dem Stand der Technik zu beheben oder zumindest zu reduzieren. Konkret ist eine der Aufgaben der vorliegenden Erfindung, einen Mehrwegtray bereitzustellen, der eine Beschädigung eines Behälters in einem Tray aufgrund von falscher Platzierung verhindert.

Diese Aufgaben werden durch einen Mehrwegtray gemäß des unabhängigen Anspruchs 1 gelöst. Vorteilhafte Weiterbildungen der Erfindung sind in den abhängigen Patentansprüchen beschrieben.

Im Konkreten ist ein nestbarer Mehrwegtray mit einer Vielzahl an definierten Aufnahmen zur Aufnahme und seitlichen Fixierung von zylinder- oder kegelstumpfförmigen Behältern, insbesondere von Blumentöpfen vorgesehen. Die Aufnahmen weisen erste Aufnahmen zur Aufnahme von Behältern einer ersten Behältergröße und zweite Aufnahmen zur Aufnahme von Behältern einer kleineren zweiten Behältergröße auf, wobei die Aufnahmegeometrien der ersten und zweiten Aufnahmen so angeordnet und miteinander verschnitten sind, dass, wenn sowohl die ersten Aufnahmen also auch die zweiten Aufnahmen mit Behältern der zweiten Behältergröße bestückt sind, sich die Behälter gegenseitig kontaktieren und die Behälter in den ersten Aufnahmen jeweils von mindestens zwei Behältern in mindestens zwei benachbarten zweiten Aufnahmen seitlich gestützt werden.

In anderen Worten beinhaltet der nestbare, insbesondere einstückig ausgebildete Mehrwegtray die ersten Aufnahmen und die zweiten Aufnahmen, die sich in ihrer Größe unterscheiden. Die ersten Aufnahmen weisen eine erste größere Größe / einen ersten größeren Durchmesser auf und sind dafür ausgebildet, Behälter der ersten (größeren) Behältergröße aufzunehmen. Die zweiten Aufnahmen weisen eine zweite kleinere Größe / einen zweiten kleineren Durchmesser auf und sind dafür ausgebildet, Behälter der zweiten (kleineren) Größe aufzunehmen. Die ersten Aufnahmen und die zweiten Aufnahmen sind dabei so zueinander angeordnet, dass, wenn alle oder benachbarte Aufnahmen des Mehrwegtrays ausschließlich mit Behältern der zweiten kleineren Behältergröße, insbesondere vollständig, bestückt sind, jeder der Behälter in den größeren ersten Aufnahmen von mindestens zwei weiteren Behältern, welche ortsfest in benachbarten kleinerer zweiten Aufnahmen sitzen, vorzugsweise punktförmig oder linienförmig, kontaktiert wird. Zusätzlich wird jeder Behälter an mindestens einer Stelle von der zugehörigen ersten Aufnahme, in welcher der betreffende Behälter positioniert ist, kontaktiert. Auf diese Weise ist jeder der Behälter an mindestens drei Stellen über einen Umfang des Behälters kontaktiert und damit in seiner Position gegen ein Verrutschen oder (Um-) Kippen gesichert.

In nochmals anderen Worten ist der Kern der Erfindung, dass in einem ersten Fall Behälter, welche die größere erste Größe aufweisen ausschließlich in erste Aufnahmen positioniert werden können, da sie / ihr Durchmesser so groß ist, dass sie nicht in die zweiten Aufnahmen passen. Die Behälter mit der ersten Größe sind in diesem Fall rutsch- und kippsicher in dem Mehrwegtray positioniert. In dem zweiten Fall sind Behälter, welche die kleinere zweite Größe aufweisen, in allen Aufnahmen positioniert, da sie aufgrund der kleineren Größe / des kleineren Durchmessers sowohl in die ersten als auch in die zweiten Aufnahmen eingesetzt werden können. Die kleineren Behälter, welche in den kleineren zweiten Aufnahmen sitzen, sind ohnehin ortsfest gesichert. Die kleineren Behälter, welche sich in den größeren zweiten Aufnahmen befinden, werden von zumindest zwei benachbarten Behältern seitlich gestützt. Somit kontaktieren sich diese gegenseitig dergestalt, dass jeder Behälter an mindestens drei Punkten von weiteren Behältern und /oder dem Mehrwegtray kontaktiert ist und somit jeder Behälter in seiner Position gehalten wird.

Auf diese Weise ist gewährleistet, dass ein Bestücker / Bediener, welcher den Mehrwegtray mit Behältern bestückt, in jede Aufnahme in die ein Behälter hineinpasst einen Behälter platzieren kann, ohne dass er abgleichen muss, ob der spezifische Behälter zu der Aufnahme gehört und trotzdem ein Risikon dass die Behälter in dem Mehrwegtray in einem vollbesetzten Transportzustand des Mehrwegtrays während eines Transports beschädigt werden, möglichst gering ist. Auf diese Weise kann auch eine Taktfrequenz der Bestückung des Mehrwegtrays mit Behältern erhöht werden, ohne ein Ausfallrisiko zu erhöhen.

Da die kleinen Behälter in den größeren Aufnahmen von mindestens zwei benachbarten Behältern, die ihrerseits den kleineren Aufnahmen verrutschsicher aufgenommen sind, seitlich gestützt werden, kann jeder beliebige Behälter aus dem Tray entnommen werden, ohne Gefahr zu laufen, dass anschließend, z.B. beim Transport, die verbleibenden Behälter verrutschen oder umfallen. Dies bedeutet auch, dass jeder der kleinen Behälter, selbst dann, wenn der Tray nicht vollständig bestückt ist, gegen Verrutschen, zumindest gegen Umkippen, gesichert ist.

Gemäß eines Aspekt der Erfndung ist ein, vorzugsweise nestbarer, Mehrwegtray mit einer Vielzahl an definierten Aufnahmen zur Aufnahme und seitlichen Fixierung von, insbesondere kegelstumpfförmigen, Behältern, insbesondere von Blumentöpfen, vorgesehen. Dabei weisen die Aufnahmen erste Aufnahmen zur Aufnahme von Behältern einer ersten Behältergröße und zweite Aufnahmen zur Aufnahme von Behältern einer kleineren zweiten Behältergröße auf. Die ersten und zweiten Aufnahmen haben unterschiedlich große Öffnungsquerschnitte, welche so angeordnet und miteinander verschnitten sind, dass die Öffnungsquerschnitte der zweiten Aufnahmen soweit in die Öffnungsquerschnitte der ersten Aufnahmen hineinreichen, dass der Durchmesser eines in einen Restöffnungsquerschnitt der ersten Aufnahmen eingeschriebenen Kreises größer gleich dem Öffnungsquerschnitt der zweiten Aufnahmen und kleiner dem Öffnungsquerschnitt der ersten Aufnahmen ist. Vorzugsweise ist der Durchmesser eines in einen Restöffnungsquerschnitt der ersten Aufnahmen eingeschriebenen Kreises gleich dem Öffnungsquerschnitt der zweiten Aufnahme.

In anderen Worten können die kreisförmigen Öffnungsquerschnitte benachbarter erster und zweiter Aufnahmen sich überlappen. Der Öffnungsquerschnitt der ersten Aufnahme wird dabei von den Öffnungsquerschnitten benachbarter zweiter Aufnahmen so weit überlagert / überlappt, dass der in den Restöffnungsquerschnitt der ersten Aufnahme welcher verbleibt, wenn man die Überlagerung durch die Öffnungsquerschnitte der zweiten Aufnahmen von dem Öffnungsquerschnitt der ersten Aufnahme abzieht, maximal einschreibbare Kreis größer gleich dem Öffnungsquerschnitt der zweiten Aufnahme und kleiner dem Öffnungsquerschnitt der ersten Aufnahme ist.

Auf diese Weise kann effektiv ein Bewegungsraum eines in die erste Aufnahme positionierten Behälters, der die zweite Größe aufweist, reduziert werden, wenn in den umliegenden zweiten Aufnahmen Behälter, die ebenfalls die zweite Größe aufweisen, positioniert sind. So kann effektiv eine Beschädigung der Behälter bei dem Transport oder einer Handhabung des Mehrwegtrays reduziert werden.

In einem weiteren Aspekt kann der in den Restöffnungsquerschnitt der ersten Aufnahme eingeschriebene Kreis dem Öffnungsquerschnitt der zweiten Aufnahme entsprechen.

In anderen Worten können der maximal in den Restöffnungsquerschnitt einschreibbare Kreis und der Öffnungsquerschnitt der zweiten Aufnahme einen identischen Durchmesser aufweisen.

Auf diese Weise kann effektiv der Bewegungsraum eines in die erste Aufnahme positionierten Behälters, der die zweite Größe aufweist, eliminiert werden, wenn in den umliegenden zweiten Aufnahmen Behälter, die ebenfalls die zweite Größe aufweisen, positioniert sind. So kann effektiv eine Beschädigung der Behälter bei dem Transport oder einer Handhabung des Mehrwegtrays weiter reduziert werden.

In einem weiteren Aspekt können die ersten und zweiten Aufnahmen trayaußenseitig durch erste und zweite Seitenwände des Trays und trayinnenseitig durch pinolenartige Geometrien definiert sein.

In anderen Worten kann der Mehrwegtray die ersten und zweiten Seitenwände beinhalten, welche mit ersten Ausbuchtungen und zweiten Ausbuchtungen ausgebildet sind. Die ersten Ausbuchtungen können dabei auf die Behälter, welche die erste Größe aufweisen abgestimmt sein und die zweiten Ausbuchtungen können auf die Behälter, welche die zweite Größe aufweisen, abgestimmt sein. Weiterhin kann der Mehrwegtray an seiner Innenseite die pinolenartigen Geometrien beinhalten, die sich ausgehend von einem Boden des Mehrwegtrays im Wesentlichen senkrecht von dem Boden weg erstrecken. Die ersten Aufnahmen können von den ersten Ausbuchtungen und den pinolenartigen Geometrien ausgebildet sein. Die zweiten Aufnahmen können von den zweiten Ausbuchtungen und den pinolenartigen Geometrien ausgebildet sein.

Durch eine Verwendung der Seitenwände als Teil der Aufnahme und die materialarmen pinolenartigen Geometrien wird wenig zusätzliches Material für eine Ausbildung der Aufnahmen in dem Mehrwegtray benötigt, was den Mehrwegtray günstiger und leichter macht.

In einem weiteren Aspekt können in einer ersten Trayrichtung, insbesondere der Längsrichtung oder der Querrichtung, die äußeren Reihen der ersten und zweiten Aufnahmen außenbündig angeordnet sein und in einer zweiten Trayrichtung, welche insbesondere die Andere der Längs- oder Querrichtung ist, die äußeren Reihen der ersten und zweiten Aufnahmen zentriert angeordnet sein.

In anderen Worten können äußerste Kreisbogenabschnitte der ersten Ausbuchtungen und der zweiten Ausbuchtungen einer spezifischen Seitenwand auf einer Geraden liegen, während äußerste Kreisbogenabschnitte der ersten und zweiten Ausbuchtungen einer weiteren spezifischen Seitenwand, die normal zu der spezifischen Seitenwand angeordnet ist, um eine Radiusdifferenz zwischen den ersten Ausbuchtungen und den zweiten Ausbuchtungen zueinander versetzt angeordnet sind.

Eine solche Anordnung ermöglicht eine verbesserte Flächenausnutzung des Mehrwegtrays.

In einem weiteren Aspekt kann jede der pinolenartigen Geometrien an höchstens, insbesondere genau, vier Aufnahmen angrenzen.

In anderen Worten kann jede der pinolenartigen Geometrien an zwei erste Aufnahmen und an zwei zweite Aufnahmen angrenzen.

Auf diese Weise kann eine optimale Kraft- und Gewichtsverteilung in dem Mehrwegtray gewährleistet werden.

In einem weiteren Aspekt können die ersten Seitenwände und / oder die zweiten Seitenwände mit zu einem Boden des Mehrwegtrays insbesondere zwischen 5 mm und 15 mm beabstandeten Drainageöffnungen ausgebildet sein.

In anderen Worten können die ersten und / oder zweiten Seitenwände die Drainageöffnungen in Form von Seitenwanddurchbrüchen beinhalten, die ein Inneres des Mehrwegtrays mit einer den Mehrwegtray umgebenden Umwelt verbinden. Diese Drainageöffnungen kann so von dem Boden beabstandet sein, dass in dem Inneren des Mehrwegtrays von dem Boden und Seitenwandabschnitten unterhalb der Drainageöffnungen eine wasserundurchlässige Wanne ausgebildet ist.

Durch die Drainageöffnungen kann überschüssiges Gieswasser aus dem Mehrwegtray abfließen und Staunässe bzw. ein Absaufen der sich in dem Mehrwegtray in den Behältern befindlichen Pflanzen kann effektiv verhindert werden. Durch die Beabstandung der Drainageöffnung von dem Boden ist gewährleistet, dass gleichzeitig ein ausreichendes Reservoir an Wasser in dem Mehrwegtray vorhanden ist, um die sich in dem Mehrwegtray befindlichen Pflanzen über einen (begrenzen) Zeitraum mit Wasser zu versorgen.

In einem weiteren Aspekt können die pinolenartigen Geometrien von einer Oberseite der pinolenartigen Geometrien ausgehende parabelförmige Ausnehmungen beinhalten.

In anderen Worten können in den pinolenartigen Geometrien an einer von dem Boden abgewandten Seite jeweils die parabelförmige Ausnehmung ausgebildet sein, die in der pinolenartigen Geomentrie einen Durchbruch ausbildet. Die parabelförmige Ausnehmung ist vorzugsweise symmetrisch in der pinolenartigen Geometrie angeordnet. In einer Draufsicht auf den Mehrwegtray ist die projizierte Geometrie der parabelförmigen Ausnehmung vorzugsweise ein Kreis.

Durch die parabelförmige Ausnehmung ist es möglich, den Mehrwegtray dichter mit Behältern zu besetzen, ohne die Oberseite der pinolenartigen Geometrie extrem dünn auszubilden. Auf diese Weise kann eine Schwachstelle an der Oberseite der pinolenartigen Geometrie verhindert werden. Zusätzlich ermöglicht die parabelförmige Ausnehmung ein Ablaufen von Wasser, das sich bei einer Reinigung des Mehrwegtrays in den pinolenartigen Geometrien sammeln könnte.

In einem weiteren Aspekt kann ein erster Durchmesser der ersten Aufnahme 130 mm betragen und ein zweiter Durchmesser der zweiten Aufnahme 90 mm bis 100 mm betragen.

In anderen Worten kann das Durchmesserverhältnis zwischen der ersten Aufnahme und der zweiten Aufnahme ungefähr 1 zu 1,3 betragen.

In einem weiteren Aspekt kann der Mehrwegtray einen umlaufenden Stapelrand an einer Oberseite des Mehrwegtrays aufweisen.

In anderen Worten kann an einer von dem Boden abgewandten Seite der ersten Seitenwände und der zweiten Seitenwände ein umlaufender Stapelrand ausgebildet sein.

Der Stapelrand verhindert ein Aneinanderkleben / Aneinanderhaften durch vorzugsweise Adhäsion und Kohäsion von genesteten Mehrwegtrays. Zusätzlich ist durch den durch den Stapelrand erzeugten Abstand zwischen den Mehrwegtrays ein Abtrocknen der Mehrwegtrays in einem lagernden genesteten Zustand ermöglicht, was einer Geruchsbelästigung und / oder Schimmelbildung entgegenwirkt.

In einem weiteren Aspekt kann der Stapelrand Reinigungsdrainageöffnungen beinhalten, die den Stapelrand in einer Höhenrichtung durchdringen.

In anderen Worten kann der Stapelrand an einer Oberseite des Stapelrands, die vorzugsweise parallel zu dem Boden orientiert ist, Reinigungsdrainageöffnungen in Form von Durchgangsöffnungen beinhalten. Die Durchgangsöffnungen sind vorzugsweise kreisförmig, wobei die Mittelfaser der Durchgangsöffnung vorzugsweise normal zu der Oberseite des Stapelrands orientiert ist.

Die Reinigungsdrainageöffnungen ermöglichen ein Ablaufen von Wasser, das sich bei einer Reinigung des Mehrwegtrays in dem Stapelrand sammeln könnte.

In einem weiteren Aspekt können in Eckabschnitten des Stapelrandes Entnestgeometrien ausgebildet sein, die sich vorzugsweise trapezförmig von der Oberseite des Stapelrandes ausgehend in den Stapelrand erstrecken.

In anderen Worten kann ausgehend von der Oberseite in den Eckabschnitten des Stapelrandes jeweils eine Ausnehmung in dem Stapelrand als Entnestgeometrie ausgebildet sein. Die Entnestgeometrie verjüngt sich vorzugsweise ausgehend von der Oberseite des Stapelrandes in Richtung Boden.

Durch die Entnestgeometrie ist es für einen Benutzer der Mehrwegtrays vereinfacht, genestete Mehrwegtrays zu entnesten. In anderen Worten ist ein Abheben eines obersten Mehrwegtrays von einem Stapel Mehrwegtrays vereinfacht.

In einem weiteren Aspekt kann sich eine Anzahl der ersten Aufnahmen von einer Anzahl der zweiten Aufnahmen um genau eins unterscheiden.

In anderen Worten kann die Anzahl der ersten Aufnahmen um genau eins größer sein als die Anzahl der zweiten Aufnahmen oder die Anzahl der ersten Aufnahmen kann um genau eins kleiner sein als die Anzahl der zweiten Aufnahmen.

In einem weiteren Aspekt kann der Mehrwegtray aus Kunststoff ausgebildet sein.

In anderen Worten kann der Mehrwegtray insbesondere aus Kunststoffen ausgebildet sein, welche sich für ein Spritzgießverfahren eignen.

In einem weiteren Aspekt können die Aufnahmen eine einzelne zusammenhängende Bodenfläche aufweisen.

In anderen Worten können alle ersten Aufnahmen und zweiten Aufnahmen insbesondere ausschließlich die unsegmentierte Bodenfläche aufweisen.

Durch die zusammenhängende Bodenfläche ist gewährleistet, dass alle Pflanzen in dem Mehrwegtray mit Wasser versorgt sind, wenn an einer beliebigen Stelle des Mehrwegtrays in eine der Aufnahmen und / oder in eine in einer der Aufnahmen positionieren Pflanze Wasser gegossen wird.

In einem weiteren Aspekt kann der Mehrwegtray in einem Spritzgießverfahren hergestellt sein.

In einem weiteren Aspekt kann der Boden des Mehrwegtrays mit Verstärkungsrippen ausgebildet sein.

In einem weiteren Aspekt können an gegenüberliegenden Seitenwänden Griffpartien ausgebildet sein.

In einem weiteren Aspekt können die Abmessungen des Mehrwegtrays ungefähr 540 mm x 310 mm x 85 mm betragen.

In einem weiteren Aspekt kann ein Eckradius des Mehrwegtrays im Wesentlichen dem Radius der ersten oder der zweiten Aufnahme entsprechen.

In einem weiteren Aspekt können an dem Stapelrand Etikettenfelder ausgebildet sein.

In einem weiteren Aspekt kann eine Höhe der ersten und zweiten Seitenwände im Wesentlichen einer Höhe der pilonenartigen Geometrien entsprechen.

### Kurzbeschreibung der Figuren

Fig. 1 ist eine perspektivische Ansicht eines erfindungsgemäßen Mehrwegtrays.
Fig. 2 ist eine weitere Ansicht des erfindungsgemäßen Mehrwegtrays, insbesondere einer Unterseite des erfindungsgemäßen Mehrwegtrays.
Fig. 3 ist eine Draufsicht auf den erfindungsgemäßen Mehrwegtray, wobei der Mehrwegtray schematisch mit Behältern einer ersten Behältergröße bestückt ist.
Fig. 4 ist eine Draufsicht auf den erfindungsgemäßen Mehrwegtray, wobei der Mehrwegtray schematisch mit Behältern einer zweiten Behältergröße bestückt ist.
Fig. 5 zeigt eine erste vergrößerte Draufsicht auf einen Ausschnitt des erfindungsgemäßen Mehrwegtrays.
Fig. 6 zeigt eine zweite vergrößerte Draufsicht auf den Ausschnitt des erfindungsgemäßen Mehrwegtrays.
Fig. 7 zeigt eine Draufsicht auf einen erfindungsgemäßen Mehrwegtray.

### Beschreibung der Ausführungsbeispiele

Nachstehend werden Ausführungsbeispiele der vorliegenden Offenbarung auf der Basis der zugehörigen Figuren beschrieben.

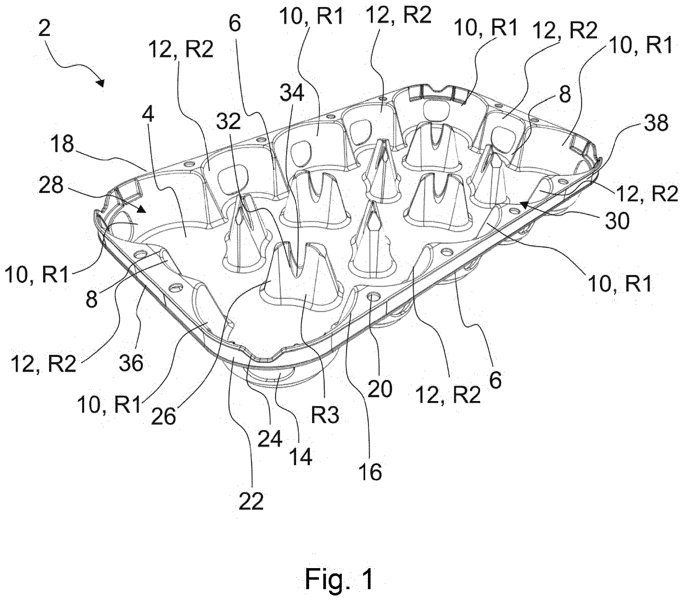

Fig. 1 zeigt einen im Wesentlichen rechteckförmigen Mehrwegtray 2 mit einem Boden 4 und sich von dem Boden 4 an langen Seiten des Bodens 4 von dem Boden 4 weg erstreckenden ersten Seitenwänden 6 sowie sich von dem Boden 4 an kurzen Seiten des Bodens 4 von dem Boden 4 weg erstreckenden zweiten Seitenwänden 8. Die ersten Seitenwände 6 und die zweiten Seitenwände 8 sind in Ecken des Bodens 4 derart miteinander verbunden, dass der Boden 4, die ersten Seitenwände 6 und die zweiten Seitenwände 8 eine Wannenform ausbilden.

Der Mehrwegtray 2 ist im Spritzgießverfahren aus Kunststoff hergestellt. In einer Ausführungsform ist dieser 540 mm lang, 310 mm breit und 85 mm hoch.

Die ersten Seitenwände 6 und die zweiten Seitenwände 8 weisen erste Ausbuchtungen 10 und zweite Ausbuchtungen 12 auf, die sich insbesondere kreisabschnittsförmig zu einer Außenseite des Mehrwegtrays wölben. Die ersten Ausbuchtungen 10 weisen hierbei einen ersten Radius R1 und die zweiten Ausbuchtungen 12 einen zweiten Radius R2 auf. Die ersten Ausbuchtungen 10 und die zweiten Ausbuchtungen 12 alternieren entlang der ersten Seitenwände 6 und entlang der zweiten Seitenwände 8.

In den ersten und zweiten Seitenwänden 6, 8, genauer gesagt in den ersten Ausbuchtungen 10 und den zweiten Ausbuchtungen 12 sind, beabstandet zu dem Boden 4, eine Vielzahl an Drainageöffnungen 14 ausgebildet. Die Drainageöffnungen 14 sind 7 mm von dem Boden 4 beabstandet. Aufgrund der Drainageöffnungen 14 kann der Wasserstand innerhalb des Mehrwegtrays 2 nie höher als die Unterkante der Drainageöffnungen sein, d.h. nie höher als 7 mm sein. Überschüssiges Wasser wird über die Drainageöffnungen 14 seitlich nach Außen abgeführt.

An von dem Boden 4 abgewandten Kanten der ersten Seitenwände 6 und der zweiten Seitenwände 8 ist ein umlaufender Stapelrand 16 im Wesentlichen parallel zu dem Boden 4 ausgebildet und weist zur Innenseite der Wannenform hin kreisabschnittförmige Ausnehmungen 18 auf. Der Radius der kreisabschnittförmigen Ausnehmung entspricht im Wesentlichen dem Radius der zugehörigen ersten Ausbuchtung 10 bzw. zweiten Ausbuchtung 12.

Der Stapelrand 16 beinhaltet Reinigungsdrainageöffnungen 20 und eine umlaufende Versteifungskante 22. Die umlaufende Versteifungskante 22 ist im Wesentlichen normal zu dem Stapelrand 16 an einer Außenseite bezogen auf die Wannenform des Mehrwegtrays 2 an dem Stapelrand 16 ausgebildet.

Der Stapelrand 16 beinhaltet weiterhin Entnestgeometrien in Form von Ausnehmungen 24. Diese sind in den Ecken des Mehrwegtrays 2, in denen die ersten Seitenwände 6 mit den zweiten Seitenwänden 8 zusammentreffen, vorgesehen und zwar im Stapelrand 16. Diese Ausnehmungen 24 sind so dimensioniert, dass man mit zumindest einem Finger eines Benutzers oder einem Greiffinger einer Automatisierungsanlage hineingreifen und ineinandergeneste Mehrwegtrays 2 entnesten kann.

Von dem Boden 4 ausgehend erstrecken sich trayinnenseitig pinolenartige Geometrien in Form von Pinolen 26 im Wesentlichen normal zu dem Boden 4. Die Pinolen 26 weisen eine knochenförmige Querschnittsfläche mit einem dritten Radius R3 auf, wobei der dritte Radius R3 dem ersten Radius R1 entspricht. Die Pinolen 26 sind dabei so angeordnet, dass sie miteinander und / oder mit den ersten Ausbuchtungen 10 und / oder mit den zweiten Ausbuchtungen 12 erste Aufnahmen 28 und zweite Aufnahmen 30 ausbilden. Im Konkreten sind die Pinolen 26 in zwei Reihen zu jeweils vier Pinolen 26 parallel zu den ersten Seitenwänden 6 angeordnet. Eine Orientierung der Pinolen 26 ändert sich hierbei von Pinolen 26A zu Pinolen 26B um 90°.

Die ersten und zweiten Seitenwänden 6, 8 und die Pinolen 26 sind schräg angestellt bzw. konisch ausgebildet, um mehrere baugleiche oder kompatible Trays 2 ineinander nesten zu können.

In der hier dargestellten Ausführungsform werden die ersten Aufnahmen 28 von ersten Ausbuchtungen 10 zusammen mit den Pinolen 26 und von den Pinolen 26 alleine gebildet. Der hier dargestellte nestbare Mehrwegtray 2 beinhaltet insbesondere acht erste Aufnahmen 28.

Die zweiten Aufnahmen 30 werden in der hier gezeigten Ausführungsform von zweiten Ausbuchtungen 12 zusammen mit den Pinolen 26 und von den Pinolen 26 alleine gebildet. Der hier dargestellte nestbare Mehrwegtray 2 beinhaltet insbesondere sieben zweite Aufnahmen 30.

Die ersten Aufnahmen 28 und die zweiten Aufnahmen alternieren sowohl in einer sich in Richtung der ersten Seitenwände 6 erstreckenden Traylängsrichtung TL als auch in einer sich in Richtung der zweiten Seitenwände 8 erstreckenden Trayquerrichtung TQ.

Die Pinolen 26 weisen an einer von dem Boden abgewandten Seite parabelförmige Ausnehmungen 32 auf, wobei sich eine Spitze 34 der parabelförmigen Ausnehmung 32 ungefähr auf einer mittleren Höhe der Pinolen 26 befindet. Die parabelförmigen Ausnehmungen 32 dienen zum einen als Wasserablauföffnungen, wenn der Tray 2 über Kopf gereinigt wird. Zum anderen ermöglichen die Ausnehmungen 32 eine Verkürzung des Abstands zweier durch die Pinolen 26 getrennte erster (großer) Aufnahmen 28 auf nahe zu null, um eine möglichst dichte Beladung des Trays 2 mit großen Töpfen zu ermöglichen.

An den zweiten Seitenwänden 8 ist jeweils mittig ein Griffabschnitt 36 ausgebildet.

An allen Seiten des Stapelrands 16 ist ein Etikettenfeld 38 ausgebildet.

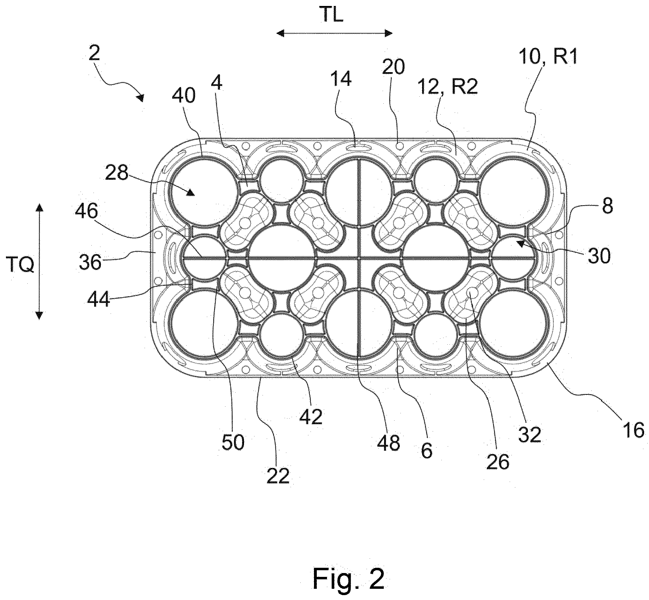

Fig. 2 zeigt eine Unterseite des Mehrwegtrays 2. Jede der ersten Aufnahmen 28 ist mit einer vollständig umlaufenden ersten Bodenstützstruktur 40 ausgebildet. Jede der zweiten Aufnahmen 30 ist mit einer vollständig umlaufenden zweiten Bodenstützstruktur 42 ausgebildet. Die erste Bodenstützstruktur 40 und die zweite Bodenstützstruktur 42 sind dabei ringförmig ausgebildet und entsprechen in einem Durchmesser im Wesentlichen einem Durchmesser der jeweiligen ersten bzw. zweiten Aufnahme 28; 30. Die erste Bodenstützstruktur 40 und die zweite Bodenstützstruktur 42 erstrecken sich von einer von dem Stapelrand 16 abgewandten Seite des Bodens 4 weg von dem Boden 4.

Entlang der ersten Seitenwände 6 und der zweiten Seitenwände 8 ist eine umlaufende Wandstützstruktur 44 ausgebildet. Die Wandstützstruktur 44 erstrecken sich von einer von dem Stapelrand 16 abgewandten Seite des Bodens 4 weg von dem Boden 4.

In Traylängsrichtung TL erstreckt sich über eine gesamte Länge des Bodens 4 auf der Mittelfaser bezogen auf die Trayquerrichtung TQ eine Längsstützstruktur 46 in Form eines Steges.

In Trayquerrichtung TQ erstreckt sich über eine gesamte Breite des Bodens 4 auf der Mittelfaser bezogen auf die Traylängsrichtung TL eine Querstützstruktur 48 in Form eines Steges.

Die Pinolen 26 sind mit der Geometriestützstrukturen 50 ausgebildet. Die Geometriestützstrukturen 50 erstrecken sich jeweils umlaufend von der knochenförmigen Querschnittsfläche der Pinolen 26 weg von dem Boden 4 auf einer von dem Stapelrand 16 abgewandten Seite des Bodens 4. Die Pinolen 26 selbst sind dabei als Hohlkörper ausgebildet.

Eine Höhe der ersten Bodenstützstruktur 40, der zweiten Bodenstützstruktur 42, der Wandstützstruktur 44, der Längsstützstruktur 46, der Querstützstruktur 48 und der Geometriestützstruktur 50 ist bezogen auf eine Ebene, die von dem Boden 4 gebildet wird, identisch.

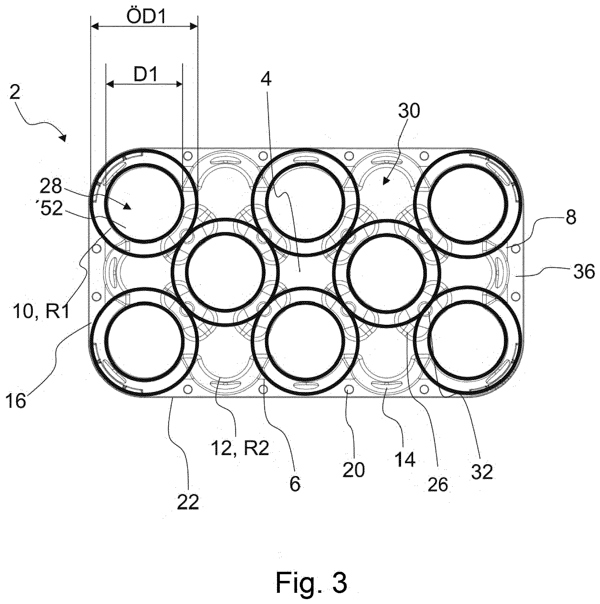

Fig. 3 zeigt eine Draufsicht auf den erfindungsgemäßen Mehrwegtray 2, wobei der Mehrwegtray 2 mit ersten Behältern 52 (schematisch dargestellt) einer ersten Behältergröße bestückt ist. In anderen Worten ist jede der ersten Aufnahmen 28 mit einem ersten Behälter 52 bestückt. Jeder der ersten Behälter 52 steht mit einer Grundfläche des ersten Behälters 52, welche einen ersten Durchmesser D1 aufweist, auf dem Boden 4 auf. Der erste Durchmesser D1 entspricht dabei vorzugsweise dem doppelten ersten Radius R1 bzw. dem doppelten Radius R3. Eine von der Grundfläche des ersten Behälters 52 abgewandte Öffnungsfläche weist einen ersten Öffnungsdurchmesser ÖD1 auf. Eine vorzugsweise kegelstumpfförmige oder konische Seitenwand des ersten Behälters 52 erstreckt sich zwischen dem ersten Durchmesser D1 und dem ersten Öffnungsdurchmesser ÖD1. Die Seitenwand des ersten Behälters 52 wird von ersten Ausbuchtungen 10 der ersten und / oder zweiten Seitenwand 6; 8 sowie von dem dritten Radius der Pinolen 26 fixiert. Jeweils zwei der ersten Behälter 52 können sich an einer ersten Kontaktposition K1, welche mittig über der parabelförmigen Ausnehmung 32 der Pinolen 26 angeordnet ist, kontaktieren.

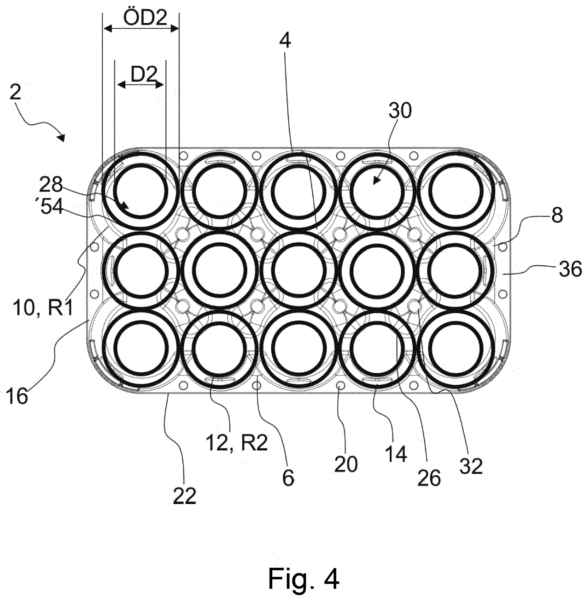

Fig. 4 zeigt eine Draufsicht auf den erfindungsgemäßen Mehrwegtray 2, wobei der Mehrwegtray 2 mit zweiten Behältern 54 (schematisch dargestellt) einer zweiten Behältergröße bestückt ist. Anders ausgedrückt ist in jeder der ersten Aufnahmen 28 und in jeder der zweiten Aufnahmen 30 ein zweiter Behälter 54 positioniert. Jeder der zweiten Behälter 54 steht mit einer Grundfläche des zweiten Behälters 54, welche einen zweiten Durchmesser D2 aufweist, auf dem Boden 4 auf. Der zweite Durchmesser D2 entspricht dabei vorzugsweise dem doppelten zweiten Radius R2 Die zweiten Behälter 54, welche in der zweiten Aufnahme 30 positioniert sind. Eine von der Grundfläche des zweiten Behälters 52 abgewandte Öffnungsfläche weist einen zweiten Öffnungsdurchmesser ÖD2 auf. Eine vorzugsweise kegelstumpfförmige oder konische Seitenwand des zweiten Behälters 54 erstreckt sich zwischen dem zweiten Durchmesser D2 und dem zweiten Öffnungsdurchmesser ÖD2. Wenn alle Aufnahmen 28, 28 mit den kleineren zweiten Behältern 54 bestückt sind, werden die kleinen zweiten Behälter 54 in den großen erste Aufnahmen 28 durch mindestens zwei benachbarte kleine zweite Behälter seitlich gestützt. Die kleinen zweiten Behälter 54 sind in den großen ersten Aufnahmen 28 sozusagen schwimmend gelagert.

Die Seitenwand des zweiten Behälters 54 wird von zweiten Ausbuchtungen 12 der ersten und / oder zweiten Seitenwand 6; 8 sowie von der Pinole 26 in dem Fall fixiert, dass der zweite Behälter 54 in der zweiten Aufnahme 30 positioniert ist. Die zweiten Behälter 54, welche in den ersten Aufnahmen 28 positioniert sind, werden von ersten Ausbuchtungen 10 und / oder zumindest zwei zweiten Behältern 54, welche sich in zweiten Aufnahmen 30 befinden, fixiert.

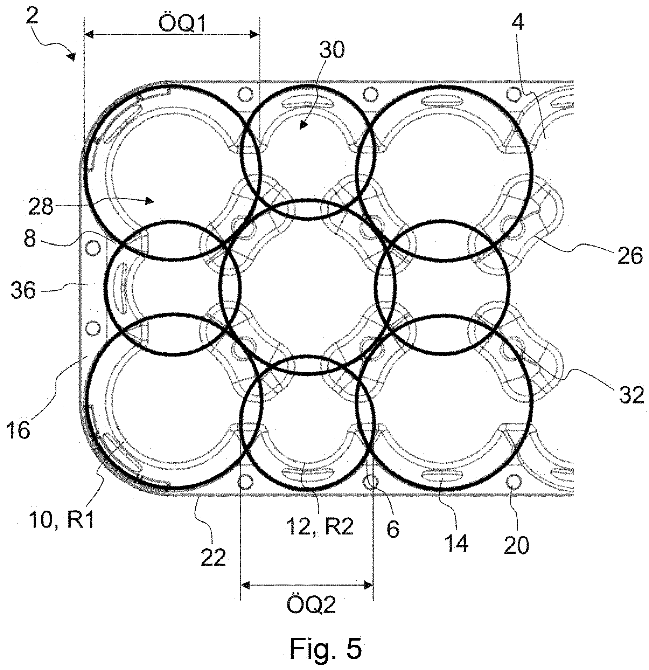

Fig. 5 zeigt einen vergrößerten Ausschnitt des Mehrwegtrays 2. In dem Mehrwegtray 2 weisen die ersten Aufnahmen 28 erste Öffnungsquerschnitte ÖQ1 auf. Die zweiten Aufnahmen 30 weisen zweite Öffnungsquerschnitte ÖQ2 auf. Die ersten Öffnungsquerschnitte ÖQ1 sind dabei größer als die zweiten Öffnungsquerschnitte ÖQ2. Die ersten Öffnungsquerschnitte ÖQ1 sind mit den zweiten Öffnungsquerschnitten ÖQ2 verschnitten. In anderen Worten ragen die zweiten Öffnungsquerschnitte ÖQ2 der zweiten Aufnahmen 30 in die ersten Öffnungsquerschnitte ÖQ1 der ersten Aufnahmen 28 hinein. In nochmals anderen Worten überlappen sich benachbarte erste Öffnungsquerschnitte ÖQ1 und zweite Öffnungsquerschnitte ÖQ2.

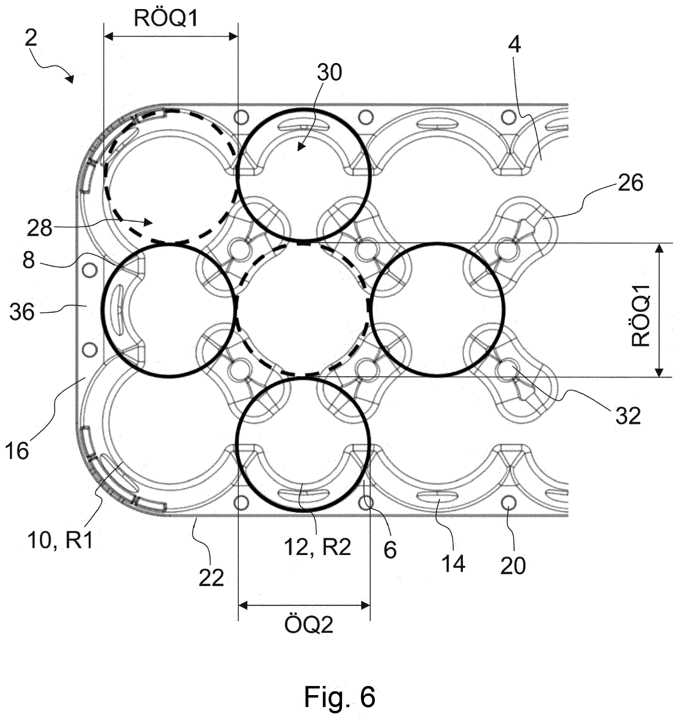

Fig. 6 zeigt den vergrößerten Ausschnitt des Mehrwegtrays 2. In dem Mehrwegtray 2 weisen die zweiten Aufnahmen 30 die zweiten Öffnungsquerschnitte ÖQ2 auf. Die ersten Aufnahmen 28 weisen einen Restöffnungsquerschnitt RÖQ1 auf. Anders ausgedrückt ist in die ersten Aufnahmen 28 ein Kreis einschreibbar, der den Restöffnungsquerschnitt RÖQ1 aufweist und von den zweiten Öffnungsquerschnitten ÖQ2 angrenzender zweiter Aufnahmen 30 und den Pinolen 26 und / oder den ersten Ausbuchtungen 10 begrenzt wird. In nochmals anderen Worten handelt es sich bei dem Restöffnungsquerschnitt RÖQ1 um den maximalen Kreisdurchmesser, der ohne die angrenzenden zweiten Öffnungsquerschnitte ÖQ2 und dem Tray zu schneiden (jedoch zu tangieren) in die erste Aufnahme einschreibbar ist. Bevorzugt ist der Restöffnungsquerschnitt RÖQ1 größer gleich dem zweiten Öffnungquerschnitt ÖQ2 der zweiten Aufnahmen 30 und kleiner dem ersten Öffnungsquerschnitt ÖQ1 der ersten Aufnahmen 28. Insbesondere bevorzugt entspricht der Restöffnungsquerschnitt RÖQ1 dem zweiten Öffnungsquerschnitt ÖQ2.

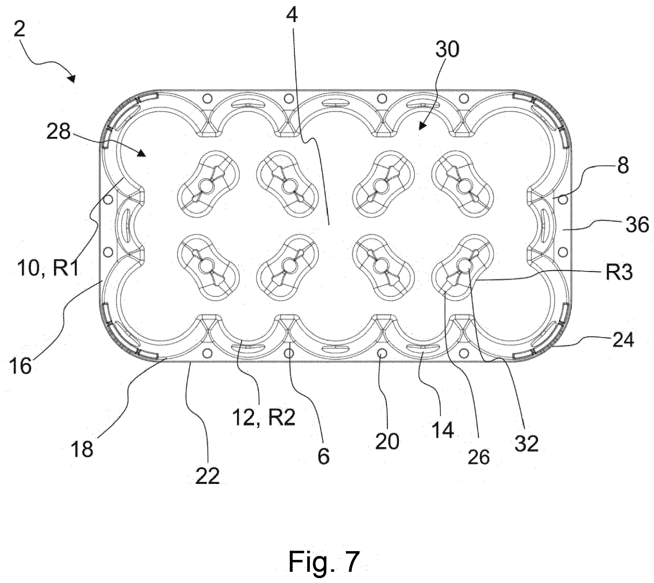

Fig. 7 zeigt eine Draufsicht auf einen erfindungsgemäßen Mehrwegtray.

Zusammenfassend ermöglicht der offenbarte Mehrwegtray 2 eine Bestückung desselbigen mit Behältern zweier unterschiedlicher Größen. Die ersten (großen) Aufnahmen 28 sind jeweils nur (ausschließlich) für eine erste (große) Behältergröße ausgelegt und die zweiten (kleinen) Aufnahmen 30 sind jeweils nur (ausschließlich) für eine zweite (kleine) Behältergröße ausgelegt. Die kleinen Behälter sind in den für sie vorgesehenen kleinen Aufnahmen 30 sicher aufgenommen und können sich darin nicht seitlich bewegen, wohingegen die kleinen Behälter zu klein für die großen Aufnahmen 28 sind. Da die ersten und zweiten Aufnahmen 28; 30 aber derart zueinander angeordnet und miteinander verschnitten sind, ragen die kleinen Behälter, die sich in den kleinen Aufnahmen 30 befinden, in die benachbarten großen Aufnahmen 28 hinein und stützen so die kleinen Behältern in den großen Aufnahmen 28 gegen Rutschen oder zumindest gegen Umkippen.

### Bezugszeichenliste

- 2: Mehrwegtray
- 4: Boden
- 6: erste Seitenwand
- 8: zweite Seitenwand
- 10: erste Ausbuchtung
- 12: zweite Ausbuchtung
- 14: Drainageöffnung
- 16: Stapelrand
- 18: Ausnehmung
- 20: Reinigungsdrainageöffnung
- 22: Versteifungskante
- 24: Entnestgeometrie
- 26: Pinolen
- 28: erste Aufnahme
- 30: zweite Aufnahme
- 32: parabelförmige Ausnehmung
- 34: Spitze
- 36: Griffabschnitt / Handgriffmulde
- 38: Etikettenfeld
- 40: erste Bodenstützstruktur
- 42: zweite Bodenstützstruktur
- 44: Wandstützstruktur
- 46: Längsstützstruktur
- 48: Querstützstruktur
- 50: Geometriestützstruktur
- 52: erster Behälter
- 54: zweiter Behälter
- R1: erster Radius
- R2: zweiter Radius
- R3: dritter Radius
- TL: Traylängsrichtung
- TQ: Trayquerrichtung
- D1: erster Durchmesser
- ÖD1: erster Öffnungsdurchmesser
- K1: erste Kontaktposition
- D2: zweiter Durchmesser
- ÖD2: zweiter Öffnungsdurchmesser
- ÖQ1: erster Öffnungsquerschnitt
- ÖQ2: zweiter Öffnungsquerschnitt
- RÖQ1: Restöffnungsquerschnitt

## Patentansprüche

1. Nestbarer Mehrwegtray (2) mit einer Vielzahl an definierten Aufnahmen (28, 30) zur Aufnahme und seitlichen Fixierung von, insbesondere kegelstumpfförmigen, Behältern (52; 54), insbesondere von Blumentöpfen, wobei die Aufnahmen erste Aufnahmen (28) zur Aufnahme von Behältern (52) einer ersten Behältergröße und zweite Aufnahmen (30) zur Aufnahme von Behältern (54) einer kleineren zweiten Behältergröße aufweisen,
**dadurch gekennzeichnet, dass**
die Aufnahmegeometrien der ersten und zweiten Aufnahmen (28, 30) so angeordnet und miteinander verschnitten sind, dass, wenn sowohl die ersten Aufnahmen (28) als auch die zweiten Aufnahmen (30) mit Behältern (54) der zweiten Behältergröße bestückt sind, die Behälter (54) in den ersten Aufnahmen (28) jeweils von mindestens zwei Behältern (54) in benachbarten zweiten Aufnahmen (30) seitlich gestützt werden.

2. Nestbarer Mehrwegtray (2) nach Anspruch 1, **dadurch gekennzeichnet, dass** die ersten und zweiten Aufnahmen (28, 30) unterschiedlich große Öffnungsquerschnitte (ÖQ1, ÖQ2) haben, welche so angeordnet und miteinander verschnitten sind, dass die Öffnungsquerschnitte (ÖQ2) der zweiten Aufnahmen (30) soweit in die Öffnungsquerschnitte (ÖQ1) der ersten Aufnahmen (28) hineinreichen, dass der Durchmesser eines in einen Restöffnungsquerschnitt (RÖQ1) der ersten Aufnahmen (28) eingeschriebenen Kreises größer gleich dem Öffnungsquerschnitt (ÖQ2) der zweiten Aufnahmen (30) und kleiner dem Öffnungsquerschnitt (ÖQ1) der ersten Aufnahmen (28) ist, insbesondere gleich dem Öffnungsquerschnitt (ÖQ2) der zweiten Aufnahme (30) ist.

3. Nestbarer Mehrwegtray (2) nach Anspruch 1 oder 2, **dadurch gekennzeichnet, dass** die ersten und zweiten Aufnahmen (28, 30) sowohl in Längsrichtung (TL) als auch in Querrichtung (TQ) des rechteckförmigen Mehrwegtrays (2) abwechselnd angeordnet sind.

4. Nestbarer Mehrwegtray (2) nach einem der Ansprüche 1 bis 3, **dadurch gekennzeichnet, dass** in einer ersten Trayrichtung, insbesondere einer Längsrichtung (TL) des Mehrwegtrays, die äußeren Reihen der ersten und zweiten Aufnahmen (28, 30) außenbündig angeordnet sind und in einer zweiten Trayrichtung, insbesondere einer Querrichtung (TQ) des Mehrwegtrays (2), die äußeren Reihen der ersten und zweiten Aufnahmen (28, 30) zentriert oder fluchtend angeordnet sind.

5. Nestbarer Mehrwegtray (2) nach einem der Ansprüche 1 bis 3, **dadurch gekennzeichnet, dass** die ersten und zweiten Aufnahmen (28, 30) trayaußenseitig durch Ausbuchtungen (10; 12) in den Seitenwänden (6; 8) des Mehrwegtrays (2) und trayinnenseitig durch pinolenartige Geometrien (26) im Boden (4) des Mehrwegtrays (2) definiert sind.

6. Nestbarer Mehrwegtray (2) nach Anspruch 5, **dadurch gekennzeichnet, dass** jede der pinolenartigen Geometrien (26) an höchstens vier Aufnahmen (28, 30) angrenzt, insbesondere an zwei ersten Aufnahmen (28) und an zwei zweiten Aufnahmen (30).

7. Nestbarer Mehrwegtray (2) nach Anspruch 5 oder 6, **dadurch gekennzeichnet, dass** die pinolenartigen Geometrien (26) von einer Oberseite der pinolenartigen Geometrien (26) ausgehende parabelförmige Ausnehmungen (32) aufweisen.

8. Nestbarer Mehrwegtray (2) nach einem der Ansprüche 1 bis 4, **dadurch gekennzeichnet, dass** die ersten Seitenwände (6) und / oder die zweiten Seitenwände (8) Drainageöffnungen (14) zum Entwässern des Mehrwegtrays (2) aufweisen, welche zum Boden (4) des Mehrwegtrays (4) beabstandet sind, insbesondere um 5 mm bis 15 mm, vorzugsweise um mindestens 7 mm.

9. Nestbarer Mehrwegtray (2) nach einem der Ansprüche 1 bis 8, **dadurch gekennzeichnet, dass** der Öffnungsquerschnitt der ersten Aufnahmen (28) einen ersten Durchmesser (ÖD1) von 130 mm hat und der Öffnungsquerschnitt der zweiten Aufnahmen einen zweiten Durchmesser (ÖD2) von 90 mm bis 100 mm hat.

10. Nestbarer Mehrwegtray (2) nach einem der Ansprüche 1 bis 9, **dadurch gekennzeichnet, dass** der Mehrwegtray (2) einen umlaufenden Stapelrand (16) an einer Oberseite des Mehrwegtrays (2) aufweist, der insbesondere Reinigungsdrainageöffnungen (20) beinhaltet, die den Stapelrand (16) in einer Höhenrichtung durchdringen.

11. Nestbarer Mehrwegtray (2) nach Anspruch 10, **dadurch gekennzeichnet, dass** an zwei gegenüberliegenden, vorzugsweise kurze, Seiten (8) des Mehrwegtrays (2) zwischen Stapelrand (16) und Aufnahmen (28, 30) eine Handgriffmulde (36) vorgesehen ist.

12. Nestbarer Mehrwegtray (2) nach Anspruch 10 oder 11, **dadurch gekennzeichnet, dass** in Eckabschnitten des Stapelrandes (16) Entnestgeometrien (24), inbesondere in Form einer Aussparung im Stapelrand (16), ausgebildet sind.

13. Nestbarer Mehrwegtray (2) nach einem der Ansprüche 1 bis 12, **dadurch gekennzeichnet, dass** sich eine Anzahl der ersten Aufnahmen (28) von einer Anzahl der zweiten Aufnahmen (30) um genau eins unterscheidet.

14. Nestbarer Mehrwegtray (2) nach einem der Ansprüche 1 bis 13, **dadurch gekennzeichnet, dass** der Mehrwegtray (2) im Spritzgießverfahren aus Kunststoff ausgebildet ist.

15. Nestbarer Mehrwegtray (2) nach einem der Ansprüche 1 bis 14, **dadurch gekennzeichnet, dass** die Aufnahmen (28, 30) eine einzelne zusammenhängende Bodenfläche (4) aufweisen.
